(19) **Europäisches Patentamt**

**European Patent Office**

**Office européen des brevets**

(11) **EP 1 144 503 B1**

(12) **EUROPEAN PATENT SPECIFICATION**

(45) Date of publication and mention
of the grant of the patent:
**21.07.2004 Bulletin 2004/30**

(51) Int Cl.⁷: **C08L 15/00**, C08K 3/36,
B60C 1/00

(21) Application number: **99963430.6**

(22) Date of filing: **06.12.1999**

(86) International application number:
**PCT/EP1999/009646**

(87) International publication number:
**WO 2000/037555 (29.06.2000 Gazette 2000/26)**

(54) **PROCESS FOR PRODUCING TYRES, TYRES THUS OBTAINED AND ELASTOMERIC COMPOSITIONS USED THEREIN**

VERFAHREN ZUM HERSTELLEN VON REIFEN, DAMIT ERHALTENE REIFEN UND DARIN BENUTZTE ELASTOMERZUSAMMENSETZUNGEN

PROCEDE DE PRODUCTION DE PNEUS, PNEUS OBTENUS SELON CE PROCEDE ET COMPOSITIONS ELASTOMERES UTILISEES

(84) Designated Contracting States:
**AT BE CH CY DE DK ES FI FR GB GR IE IT LI LU MC NL PT SE**

(30) Priority: **22.12.1998 EP 98124373**
**15.01.1999 US 116237 P**

(43) Date of publication of application:
**17.10.2001 Bulletin 2001/42**

(73) Proprietor: **Pirelli Pneumatici S.p.A.**
**20126 Milano (IT)**

(72) Inventors:
• **NAHMIAS NANNI, Marco**
**I-20121 Milano (IT)**
• **SERRA, Antonio**
**I-16138 Genova (IT)**

(74) Representative: **Marchi, Massimo et al**
c/o Marchi & Partners s.r.l.,
Via Pirelli, 19
20124 Milano (IT)

(56) References cited:
• **DATABASE WPI Section Ch, Week 9522 Derwent Publications Ltd., London, GB; Class A18, AN 95-167343 XP002103229 & JP 07 090123 A (YOKOHAMA RUBBER CO LTD), 4 April 1995 (1995-04-04)**
• **S. VARUGHESE; D.K. TRIPATHY: "Chemical Interaction between epoxidized natural rubber and silica: studies on cure characteristics and low temperature dynamic mechanical properties" JOURNAL OF APPLIED POLYMER SCIENCE., vol. 44, 1992, pages 1847-1852, XP002103228 NEW YORK US cited in the application**

**Description**

The present invention relates to a process for producing tyres for the wheels of vehicles, to the tyres thus obtained and to crosslinkable elastomeric compositions used therein. More particularly, the present invention relates to a process for producing tyres for the wheels of vehicles, which can be made essentially without conventional crosslinking agents, to the tyres thus obtained and to the crosslinkable compositions used therein comprising a polymer containing epoxide groups and an active filler containing hydroxyl groups.

Processes for vulcanizing diene elastomers with sulphur are widely used in the rubber industry for the production of a wide range of products, and in particular tyres for the wheels of vehicles. Although these processes give high-quality vulcanized products, they are considerably complicated to carry out, mainly due to the fact that, in order to obtain optimum vulcanization within industrially acceptable times, it is necessary to use a complex vulcanizing system which includes, besides sulphur or sulphur-donating compounds, one or more activators (for example stearic acid, zinc oxide and the like) and one or more accelerators (for example thiazoles, dithiocarbamates, thiurams, guanidines, sulphenamides and the like). The presence of these products can, in some cases, entail considerable problems in terms of the harmfulness/toxicity both during production and during use, in particular when the vulcanized products are intended for medical/health-care or food use. In addition, it is known that the use of sulphur or sulphur-donating compounds leads, during the vulcanization stage which is generally carried out at temperatures above 150°C, to the development of volatile sulphurized compounds.

Consequently, in recent years, research efforts have been directed along two different lines, the first being to improve the known vulcanization processes in order to make them more efficient and cleaner, the second aimed at developing alternative crosslinking techniques. Although appreciable progress has been made, it is not possible to state at the present time that alternative techniques to crosslinking with sulphur exist which would give similar results and would simultaneously afford an effective simplification in terms of production. For example, crosslinking processes mediated by peroxide compounds require special precautions on account of the instability of these compounds, in addition to requiring the use of activators. Radiation-mediated crosslinking involves the use of complex equipment, as well as the incorporation of all the precautions required when high-energy and high-power radiation is used.

It is known practice to produce tyres for the wheels of vehicles using elastomeric compositions containing silica or mixtures of silica and carbon black as reinforcing filler. These compositions are usually used to produce tyre tread bands which display excellent roadholding, in particular in wet conditions, and low resistance to rolling. To this end, blends containing silica or silica/carbon black mixtures and, as polymer base, a polymer containing epoxide groups, for example epoxidized natural rubber or an epoxidized styrene/butadiene copolymer (see, for -example, patents US-4,179,421, US-4,341,672, EP-644,235 and EP-763,564), have been developed in particular. These blends are crosslinked according to conventional methods, in particular by means of systems with sulphur or peroxides. Silane compounds are usually added to the blends in order to increase the compatibility between the silica and the polymer base.

The article by S. Varughese and D.K.Tripathy published in the *Journal of Applied Polymer Science,* Vol. 44, pp. 1847-1852 (1992) reports a study on the rheometric behaviour of blends consisting of epoxidized natural rubber (ENR) and silica which are free of conventional crosslinking agents, in order to investigate the interactions between ENR and silica. In particular, blends containing ENR epoxidized to 50 mol% (ENR-50), silica and optionally bis(triethoxysilylpropyl) tetrasulphide (Si-69) as compatibilizing agent were prepared. The blends were prepared in a laboratory two-cylinder mixer using as short a mixing time as possible in order to avoid adhesion of the blends to the mixer cylinders. The rheological properties were studied using a rheometer heated at 180°C for 1 hour. According to the authors, the results obtained are said to demonstrate that a chemical reaction takes place between the silica and the ENR-50, leading to mild crosslinking. A slightly higher level of crosslinking is said to be obtainable in the samples containing silane.

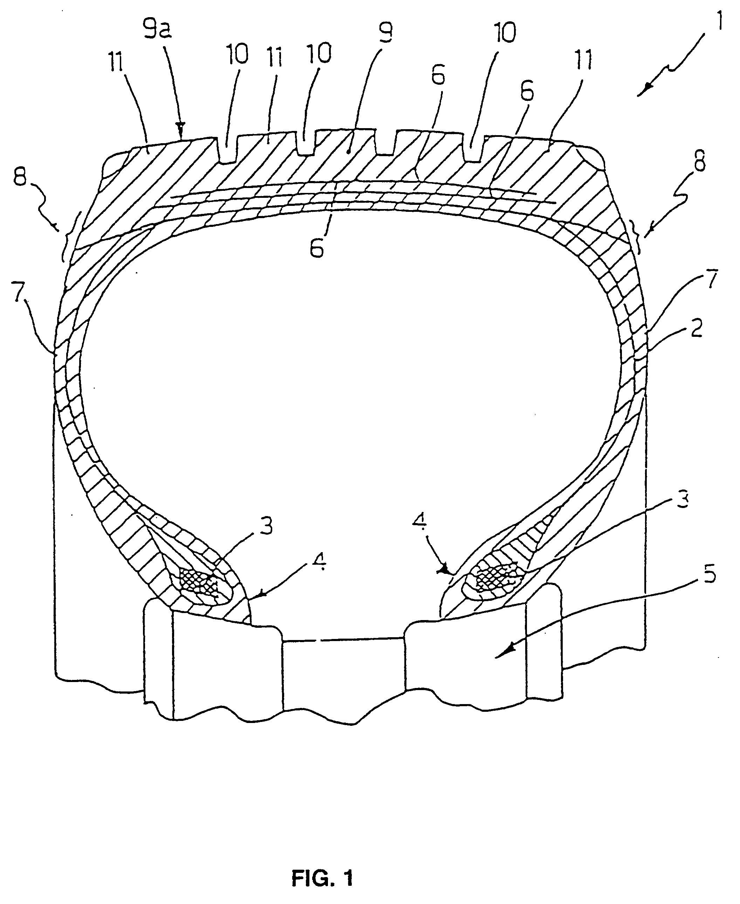

From the rheometric curves reported in the abovementioned article, a modest rise can indeed be seen in the torque values (evaluated by the Applicant at about 5 dN·m after 1 hour of heating at 180°C - see page 1849, Figure 1, Curve D) with a quite modest rate. These values thus appear to indicate the existence of a certain degree of crosslinking in the blends containing silica and ENR-50, but it is of modest extent and above all has an extremely low rate of crosslinking, which is entirely insufficient for them to be of practical use. This fact is confirmed by the same authors of the article mentioned above, when they state that the assumed crosslinking between the epoxide groups and the silanol groups in the silica would require an activation energy greater than that in common vulcanization processes (see page 1849). Thus, these blends would be entirely unsuitable for the industrial-scale production of crosslinked elastomeric manufactured products in general, and specifically of tyres.

The Applicant has now found, surprisingly, that crosslinked manufactured products, and in particular tyres for the wheels of vehicles, can be produced, essentially without additional crosslinking agents, by using crosslinkable compositions comprising an elastomeric polymer containing epoxide groups and an active filler containing hydroxyl groups. By heating to a predetermined temperature and for a predetermined time, these compositions achieve a high degree of crosslinking in short times, thereby enabling them to be used for the industrial-scale production of crosslinked manufactured products, and in particular of tyres.

According to a first aspect, the present invention thus relates to a process for producing tyres for the wheels of vehicles, the said process comprising the following phases:

- making a raw tyre comprising at least one crosslinkable elastomeric material;
- molding the raw tyre in a molding cavity defined in a vulcanization mold;
- crosslinking the elastomeric material by heating the tyre to a predetermined temperature and for a predetermined time;

characterized in that the raw tyre comprises at least one crosslinkable elastomeric material comprising an elastomeric polymer containing epoxide groups and an active filler containing hydroxyl groups which is dispersed in the said polymer, and in that the phase of crosslinking of the said elastomeric material is carried out essentially without additional crosslinking agents.

According to a preferred aspect, the crosslinking phase is carried out by heating the tyre to a maximum temperature of at least 100°C, preferably of at least 120°C, for a time of at least 3 minutes, preferably of at least 5 minutes.

According to a further preferred aspect, the active filler is dispersed in the elastomeric polymer containing epoxide groups, with a dispersion index of greater than 90%, preferably greater than 95%, even more preferably greater than 98%.

According to a further preferred aspect, the crosslinkable elastomeric material is characterized by an effective degree of crosslinking equal to at least 65% after no more than 5 minutes of heating at 170°C.

In a second aspect, the present invention relates to a tyre for the wheels of vehicles, comprising one or more components made of crosslinked elastomeric material, characterized in that at least one of the said components comprises an elastomeric polymer containing epoxide groups and an active filler containing hydroxyl groups which is dispersed in the said polymer, the said material being crosslinked essentially without additional crosslinking agents.

According to a further aspect, the present invention relates to a composition comprising an elastomeric polymer containing epoxide groups and an active filler containing hydroxyl groups which is dispersed in the said polymer, the said composition being crosslinkable essentially without additional crosslinking agents and being characterized by an effective degree of crosslinking equal to at least 65% after no more than 5 minutes of heating at 170°C.

According to a further aspect, the present invention relates to a crosslinked manufactured product comprising an elastomeric polymer containing epoxide groups and an active filler containing hydroxyl groups which is dispersed in the said polymer, characterized in that the said manufactured product is crosslinked essentially without additional crosslinking agents, and the filler is dispersed in the polymer, with a dispersion index of greater than 90%, preferably greater than 95%, even more preferably greater than 98%.

According to a further aspect, the present invention relates to a process for preparing an elastomeric composition comprising an elastomeric polymer containing epoxide groups and an active filler containing hydroxyl groups which is dispersed in the said polymer, the said composition being crosslinkable without additional crosslinking agents, the said process comprising mixing the active filler with the polymer for a predetermined time so as to obtain a degree of dispersion of the filler of greater than 90%, and at a predetermined temperature so as to avoid pre-crosslinking of the composition.

For the purposes of the present description and the claims, the expression "essentially without additional crosslinking agents" means that the crosslinkable composition is not subjected to the action of other systems capable of bringing about the crosslinking, or else that other products which may be present in the composition can in themselves participate in the crosslinking reaction, but are used in amounts less than the minimum amount required to obtain an appreciable degree of crosslinking in short times (for example within 5 minutes). In particular, the compositions according to the present invention are crosslinkable essentially without any of the crosslinking systems usually used in the art, such as, for example, sulphur or sulphur donors, peroxides or other radical initiators, and neither are these compositions subjected to the action of high-energy radiation (UV, gamma rays, etc.) so as to induce crosslinking phenomena in the polymer.

For the purposes of the present description and the claims, the expression "effective degree of crosslinking" ($\%R_{eff}$) means, with reference to an MDR (MDR = moving die rheometer) rheometric curve obtained on a sample of the composition heated at 170°C for a total time of 30 min, the difference between the effective torque ($M_{eff}$) and the minimum torque ($M_L$) values, which is expressed as a percentage relative to the difference between the final torque ($M_{fin}$), i.e. at the time $t_{fin}$ = 30 min, and $M_L$:

$$\%R_{eff} = \frac{M_{eff} - M_L}{M_{fin} - M_L} * 100 \qquad (1)$$

The $M_{eff}$ value is unambiguously determined from the MDR curve as the torque value at the point of intersection between:

- the line (A) which passes between the minimum point on the MDR curve ($t_{ML}$; $M_L$) and the point at which there is an increase of 1 dN·m in the torque value relative to $M_L$ ($t_{s1}$; $M_L$+1) ; and:

- the line (B) which passes between the final point (30; $M_{fin}$) and the point at which there is an increase in the torque value relative to $M_L$ equal to 90% of the total variation of the torque between the maximum value $M_H$ and the minimum value $M_L$ ($t_{90}$; $M_L$ + 0.9 ($M_H$ - $M_L$)).

The gradients of the lines (A) and (B) represent a measure, respectively, of the mean initial crosslinking speed (i.e. in the first period after the minimum point $M_L$ at which the crosslinking has started) and the mean final crosslinking speed (i.e. in the period between the point at which 90% of the total crosslinking is obtained and the final point, set at 30 min).

Fig. 1 is a typical MDR curve on which the characteristic points and the lines (A) and (B) are shown. The following equations (2) and (3) represent the lines A and B, respectively:

$$M = v_i * t + (M_L + 1) - v_i * t_{s1} \tag{2}$$

$$M = v_f * t + M_{fin} - v_f * 30 \tag{3}$$

where $M_L$, $t_{s1}$ and $M_{fin}$ are defined above, while:

$$V_i = \frac{1}{t_{s1} - t_{ML}} \tag{4}$$

$$V_f = \frac{M_{fin} - (M_L + 0.9 (M_H - M_L))}{30 - t_{90}} \tag{5}$$

Equating equations (2) and (3) gives the expression which makes it possible to calculate $t_{eff}$ and thus $M_{eff}$:

$$t_{eff} = \frac{M_{fin} - (M_L + 1) - V_f * 30 + V_i * t_{s1}}{V_i - V_f} \tag{6}$$

$$M_{eff} = V_i * t_{eff} + (M_L + 1) - V_i * t_{s1} \tag{7}$$

The MDR curves can be determined as described in ASTM standard D5289-95.

The polymers containing epoxide groups which can be used in the compositions according to the present invention are homopolymers or copolymers with elastomeric properties, having a glass transition temperature (Tg) of less than 23°C, preferably less than 0°C, containing at least 0.05 mol%, preferably from 0.1 to 70 mol%, even more preferably from 0.5 to 60 mol%, of epoxide groups relative to the total number of moles of monomers present in the polymer. Mixtures of different polymers containing epoxide groups, or alternatively mixtures of one or more epoxidized polymers with one or more non-epoxidized elastomeric polymers, also fall within this definition.

In the case of copolymers, these can have a random, block, grafted or mixed structure. The average molecular weight of the base polymer is preferably between 2000 and 1,000,000, preferably between 50,000 and 500,000.

In particular, epoxidized diene homopolymers or copolymers, in which the base polymer structure, of synthetic or natural origin, is derived from one or more conjugated diene monomers, optionally copolymerized with monovinylarenes and/or polar comonomers, are preferred.

The polymers which are particularly preferred are those derived from the (co)polymerization of diene monomers containing from 4 to 12, preferably from 4 to 8, carbon atoms, chosen, for example, from:

1,3-butadiene, isoprene, 2,3-dimethyl-1,3-butadiene, 3-butyl-1,3-octadiene, 2-phenyl-1,3-butadiene and the like, or mixtures thereof. 1,3-Butadiene and isoprene are particularly preferred.

Monovinylarenes which can optionally be used as comonomers generally contain from 8 to 20, preferably from 8 to 12, carbon atoms and can be chosen, for example, from: styrene; 1-vinylnaphthalene; 2-vinylnaphthalene; various alkyl, cycloalkyl, aryl, alkylaryl or arylalkyl derivatives of styrene, such as, for example: 3-methylstyrene, 4-propylstyrene, 4-cyclohexylstyrene, 4-dodecylstyrene, 2-ethyl-4-benzylstyrene, 4-p-tolylstyrene, 4-(4-phenylbutyl)styrene and the like, or mixtures thereof. Styrene is particularly preferred. These monovinylarenes can optionally be substituted with one or more functional groups, such as alkoxy groups, for example 4-methoxystyrene, amino groups, for example 4-dimethylaminostyrene, and the like.

Various polar comonomers can be introduced into the base polymer structure, in particular vinylpyridine, vinylquinoline, acrylic and alkylacrylic acid esters, nitriles and the like, or mixtures thereof, such as, for example: methyl acrylate, ethyl acrylate, methyl methacrylate, ethyl methacrylate, acrylonitrile and the like.

Among the diene polymers which are particularly preferred are: natural rubber, polybutadiene, polyisoprene, styrene/butadiene copolymers, butadiene/isoprene copolymers, styrene/isoprene copolymers, nitrile rubbers and the like, or mixtures thereof.

In the case of copolymers, the amount of diene comonomer relative to the other comonomers is such as to ensure that the final polymer has elastomeric properties. In this sense, it is not possible generally to establish the minimum amount of diene comonomer required to obtain the desired elastomeric properties. As a guide, an amount of diene comonomer of at least 50% by weight relative to the total weight of the comonomer can generally be considered sufficient.

The base diene polymer can be prepared according to known techniques, generally in emulsion, in suspension or in solution. The base polymer thus obtained is then subjected to epoxidization according to known techniques, for example by reaction in solution with an epoxidizing agent. This agent is generally a peroxide or a peracid, for example m-chloroperbenzoic acid, peracetic acid and the like, or hydrogen peroxide in the presence of a carboxylic acid or a derivative thereof, for example acetic acid, acetic anhydride and the like, optionally mixed with an acid catalyst such as sulphuric acid. Further details regarding processes for epoxidizing elastomeric polymers are described, for example, in US patent 4,341,672 or by Schulz et al. in R*ubber Chemistry and Technology,* Vol. 55, p. 809 et seq.

Polymers containing epoxide groups which can also be used are elastomeric copolymers of one or more monoolefins with an olefinic comonomer containing one or more epoxide groups. The monoolefins can be chosen from: ethylene and α-olefins generally containing from 3 to 12 carbon atoms, such as, for example:

propylene, 1-butene, 1-pentene, 1-hexene, 1-octene and the like, or mixtures thereof. The following are preferred: copolymers between ethylene and an α-olefin, and optionally a diene; homopolymers of isobutene or copolymers thereof with smaller amounts of a diene, which are optionally at least partially halogenated. The diene optionally present generally contains from 4 to 20 carbon atoms and is preferably chosen from: 1,3-butadiene, isoprene, 1,4-hexadiene, 1,4-cyclohexadiene, 5-ethylidene-2-norbornene, 5-methylene-2-norbornene and the like. Among these, the following are particularly preferred: ethylene/propylene copolymers (EPR) or ethylene/propylene/diene copolymers (EPDM); polyisobutene; butyl rubbers; halobutyl rubbers, in particular chlorobutyl or bromobutyl rubbers; and the like, or mixtures thereof. Olefinic comonomers containing epoxide groups can be chosen, for example, from: glycidyl acrylate, glycidyl methacrylate, vinylcyclohexene monoxide, allyl glycidyl ether and methallyl glycidyl ether. The introduction of the epoxide groups by the abovementioned epoxidized comonomers can be carried out by copolymerization of the corresponding monomers according to known techniques, in particular by radical copolymerization in emulsion. When a diene comonomer is present, this can be used to introduce epoxide groups by an epoxidation reaction as described above.

Examples of epoxidized elastomeric polymers which can be used in the present invention and which are currently commercially available are the products Epoxyprene® from Guthrie (epoxidized natural rubber - ENR) and the products Poly BD® from Elf Atochem (epoxidized polybutadiene).

For the purposes of the present invention, the expression "active filler containing hydroxyl groups" means a material of inorganic or organic nature in subdivided form whose surface bears active hydroxyl groups capable of interacting with the epoxide groups of the polymer. The following materials, for example, fall into this class: silica, in particular precipitated silica and pyrogenic silica, alumina, titanium oxide, cellulose fibres, microcrystalline cellulose, zeolites, kaolin and the like, or mixtures thereof. It is also possible to use fillers, which are not active per se, whose surface is modified with hydroxyl groups, for example carbon black at least partially coated with silica, as described, for example, in patent application WO 96/37546 and WO 98/13428.

Active fillers which are particularly preferred are: precipitated silica, pyrogenic silica, alumina or mixtures thereof. In order to obtain effective interaction with the epoxidized polymer, the surface area of the active filler (determined by the BET method) is preferably greater than 40 $m^2/g$, even more preferably between 80 and 600 $m^2/g$, while the density of the active hydroxyl groups present on the filler is generally greater than 1 group/$nm^2$, preferably greater than 5 groups/$nm^2$. The density of active hydroxyl groups can be determined by NMR analysis, as described, for example, by Leonardelli et al. in J. Am. Chem. Soc., 114, 16 (1992).

In particular, commercial products which can advantageously be used as active fillers according to the present-invention can be chosen, for example, from: VN3 products from Degussa, Zeosil® products from Rhône-Poulenc and Ecoblack® products from Cabot Corp.

The minimum amount of filler required to obtain a satisfactory degree of crosslinking can be determined as a function of the specific materials used and the characteristics which it is desired to obtain for the final crosslinked manufactured product. On the basis of the investigations carried out, the Applicant has found that, in general, it is necessary to use an amount of active filler of greater than 20 phr, preferably between 30 and 150 phr (phr = parts by weight per 100 parts by weight of polymer base).

The active filler can be used as a mixture with other non-active fillers commonly used as reinforcers in crosslinked elastomeric compositions, for example carbon black, calcium carbonate and the like. It is found that an amount of active filler equal to at least 50% by weight of the total weight of filler present in the blend is sufficient to obtain a satisfactory result. Naturally, these amounts can vary as a function of the nature of the fillers used and the characteristics required for the final crosslinked manufactured product.

The dispersion index (D%) of the active filler in the polymer base can be determined by optical or electron microscopy analysis of a thin section (thickness: 1 µm) of the composition on the basis of the number of particles of undispersed filler. Conventionally, filler which is aggregated in the form of particles with a diameter of greater than or equal to 7 µm is considered as "undispersed".

The dispersion index is calculated according to the following formula:

$$D\% = (1 - 0.4 * \frac{V}{L}) * 100 \tag{8}$$

where:

$$V = \frac{A}{A_{cot}} * 100 \tag{9}$$

$$L = \frac{d_c}{d_f} * F\% \tag{10}$$

A = total area of the undispersed particles;
$A_{tot}$ = total area of the section examined;
$d_c$ = density of the composition;
$d_f$ = density of the filler;
%F = % by weight of filler present in the composition.

The factor 0.4 in formula (8), usually known as the "swelling factor", is a parameter of empirical nature which gives a measure of the amount of filler effectively present in the undispersed aggregates, taking into account the fact that a certain amount of "trapped" polymer is present in these aggregates. When the filler per se cannot readily be distinguished from the surrounding polymer matrix, in particular when an optical microscope is used, a small amount of a suitable contrast agent, for example carbon black, can be added to the filler.

Further details regarding the determination of the dispersion index of the filler are given, for example, in: "Carbon Black Dispersion Measurement. Part II. Influence of Dispersion on Physical Properties" by B.R. Richmond (Meeting of the Rubber Division, ACS, October 26-29, 1993).

The crosslinkable compositions according to the present invention can comprise additives commonly used, chosen on the basis of the specific application for which they are intended. For example, antioxidants, protective agents, plasticizers, adhesives, anti-ozonizing agents, curing resins, modifying resins, fibres (for example Kevlar® pulp), and the like, can be added to these compositions. In particular, in order to improve the processability, a lubricant, generally chosen from mineral oils, plant oils, synthetic oils and the like, or mixtures thereof, for example: aromatic oil, naphthenic oil, phthalates, soybean oil, epoxidized soybean oil and the like, can be added to the crosslinkable compositions according to the present invention. The amount of lubricant can generally range between 2 and 100 phr, preferably between 5 and 50 phr.

The crosslinkable compositions according to the present invention can be prepared by mixing the polymer base and the active filler according to techniques known in the art. The mixing can be carried out, for example, using an open-mill mixer, or an internal mixer of the type with tangential rotors (Banbury) or interlocking rotors (Intermix), or in continuous mixers of the Ko-Kneader (Buss) or co-rotating or counter-rotating twin-screw type.

During the mixing, the temperature is kept below a predetermined value so as to avoid premature crosslinking of the composition. To this end, the temperature is generally kept below 130°C, preferably below 100°C, even more preferably below 80°C. As regards the mixing time, this can vary within a wide range, depending mainly on the specific composition of the blend and on the type of mixer used, and is predetermined so as to obtain the desired degree of dispersion of the filler in the polymer base. In general, a satisfactory result can be obtained with a mixing time of more than 90 sec, preferably between 3 and 35 min.

In order to optimize the dispersion of the filler while keeping the temperature below the values indicated above, multi-stage mixing processes can also be employed, optionally using a combination of different mixers arranged in series.

As an alternative to the abovementioned solid-state mixing processes, in order to avoid problems deriving from an overheating of the blend with consequent undesired pre-crosslinking phenomena, the crosslinkable compositions according to the present invention can advantageously be prepared by mixing the active filler with the polymer base in the form of an aqueous emulsion or a solution in an organic solvent. The filler can be used as it is or in the form of a suspension or dispersion in an aqueous medium. The polymer thus filled is subsequently separated from the solvent or from the water by suitable means. For example, when a polymer in emulsion is used, the polymer can be precipitated in the form of particles including the filler by adding a coagulant.

A coagulant which can be used, in particular is an electrolytic solution, for example an aqueous sodium or potassium silicate solution. The coagulation process can be promoted by using a volatile organic solvent which is then removed by evaporation during precipitation of the filled polymer. Further details regarding processes of this type for the preparation of filled elastomers are given, for example, in US patent 3,846,365.

The present invention will now be further illustrated by a number of embodiments, with reference to the attached figures, in which:

Figure 1 is a view in cross section with partial cutaway of a tyre according to the present invention;

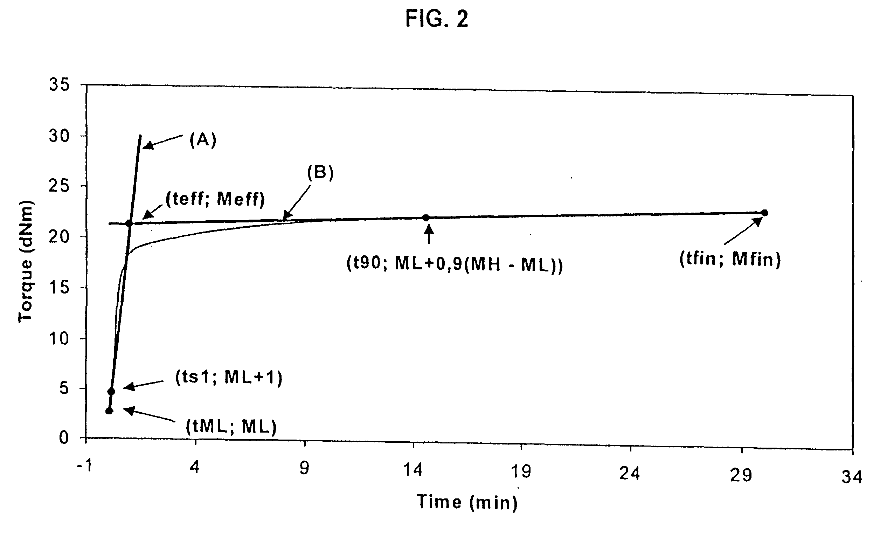

Figure 2 shows a typical MDR curve, in which are given the critical points and the lines (A) and (B) as defined above;
Figure 3 shows the MDR curves obtained for Examples 5 and 6 given later.

With reference to Fig. 1, a tyre 1 conventionally comprises at least one carcass ply 2 whose opposite side edges are externally folded around respective anchoring bead cores 3, each enclosed in a bead 4 defined along an inner circumferential edge of the tyre, with which the tyre engages on a rim 5 forming part of the wheel of a vehicle.

Along the circumferential development of the carcass ply 2 are applied one or more belt strips 6, made using metal or textile cords enclosed in a sheet of blend. Outside the carcass ply 2, in respective opposite side portions of this ply, there is also applied a pair of sidewalls 7, each of which extends from the bead 4 to a so-called "shoulder" region 8 of the tyre, defined by the opposing ends of the belt strips 6. On the belt strips 6 is circumferentially applied a tread band 9 whose side edges end at the shoulders 8, joining it to the sidewalls 7. The tread band 9 externally has a rolling surface 9a, designed to come into contact with the ground, in the surface of which tread band can be made circumferential grooves 10 intercalated with transverse grooves, not shown in the attached figure, which define a plurality of blocks 11 variously distributed on the said rolling surface 9a.

The process for producing the tyre according to the present invention can be carried out according to techniques and using apparatus known in the art (see, for example, patents EP 199,064, US 4,872,822 and US 4,768,937). More particularly, this process comprises a phase of manufacturing the raw tyre, in which a series of semi-finished articles, prepared beforehand and separately from each other and corresponding to the various parts of the tyre (carcass plies, belt strips, bead hoops, fillers, sidewalls and tread) are combined together using a suitable manufacturing machine.

The raw tyre thus obtained is then subjected to the subsequent phases of molding and crosslinking. To this end, a vulcanization mold is used which is designed to receive the tyre being processed inside a molding cavity having walls which are countermolded to the outer surface of the tyre when the crosslinking is complete.

The raw tyre can be molded by introducing a pressurized fluid into the space defined by the inner surface of the tyre, so as to press the outer surface of the raw tyre against the walls of the molding cavity. In one of the molding methods widely practised, it is envisaged that a vulcanization chamber made of elastomeric material, filled with steam and/or another fluid under pressure, is expanded inside the tyre closed inside the molding cavity. In this way, the raw tyre is pushed against the inner walls of the molding cavity, thus obtaining the desired molding. Alternatively, the molding can be carried out without an expandable vulcanization chamber, by providing inside the tyre a toroidal metal support shaped according to the configuration of the inner surface of the tyre to be obtained (see, for example, patent EP 242,840). The difference in coefficient of thermal expansion between the toroidal metal support and the crude elastomeric material is exploited to achieve an adequate molding pressure.

At this point, the phase of crosslinking of the raw elastomeric material present in the tyre is carried out. To this end, the outer wall of the vulcanization mold is placed in contact with a heating fluid (generally steam) such that the outer wall reaches a maximum temperature generally of between 100°C and 200°C. Simultaneously, the inner surface of the tyre is brought to the crosslinking temperature using the same pressurized fluid used to press the tyre against the walls of the molding cavity, heated to a maximum temperature of between 100 and 250°C. The time required to obtain a satisfactory degree of crosslinking throughout the mass of the elastomeric material can vary in general between 3 min and 60 min and depends mainly on the dimensions of the tyre.

A number of embodiments of the present invention are given below.

EXAMPLES 1-4

The compositions given in Table 1 were prepared using an open cylinder mixer, with a mixing time of about 30 min, keeping the maximum temperature at about 70°C.

The compositions thus prepared were subjected to MDR rheometric analysis using an MDR rheometer from Monsanto, the tests being carried out at 170°C for 30 min, with an oscillation frequency of 1.66 Hz (100 oscillations per minute) and an oscillation amplitude of $\pm$ 0.5°. Table 1 gives the parameters of the MDR curves thus obtained.

TABLE 1

| EXAMPLE | 1 | 2 | 3(*) | 4(*) |
|---|---|---|---|---|
| Epoxyprene® ENR 25 | 100 | 100 | 100 | 100 |
| Zeosil® 1165 | 40 | 60 | -- | -- |
| N234 | -- | -- | -- | 60 |
| $M_L$ (dN·m) | 2.33 | 4.35 | 1.01 | 2.65 |
| $M_H$ (dN·m) | 7.50 | 19.63 | 1.19 | 3.74 |
| $M_{fin}$ (dN·m) | 7.50 | 19.63 | 0.74 | 3.74 |
| $t_{ML}$ (sec) | 0.13 | 0 | -- | 0 |
| $t_{s1}$ (sec) | 0.31 | 0.07 | -- | 23.7 |
| $t_{90}$ (sec) | 3.57 | 3.22 | 0.10 | 21.8 |
| $M_{eff}$ (dN·m) | 6.93 | 17.97 | -- | 3.66 |
| $t_{eff}$ (sec) | 0.96 | 0.95 | -- | 23.9 |
| $\%R_{eff}$ | 89.0 | 89.2 | -- | 92.6 |

(*) Comparative
Epoxyprene® ENR 25: epoxidized natural rubber containing 25 mol% of epoxide groups (Guthrie);
Zeosil® 1165: precipitated silica with a BET surface area equal to 165 $m^2$/g and a density of hydroxyl groups equal to 13.1 groups/$nm^2$ (Rhône-Poulenc)

The examples given in Table 1 show that, with the compositions according to the invention containing silica, it is possible to achieve a high degree of crosslinking without the addition of any conventional crosslinking system. In contrast, using carbon black alone (essentially free of active hydroxyl groups) instead of silica, it is not possible to obtain appreciable crosslinking in industrially acceptable times.

EXAMPLES 5-6

The compositions given in Table 2 were prepared using the same open mixer as in Examples 1-4, with a mixing time of about 30 min, the maximum temperature being kept at about 60°C.

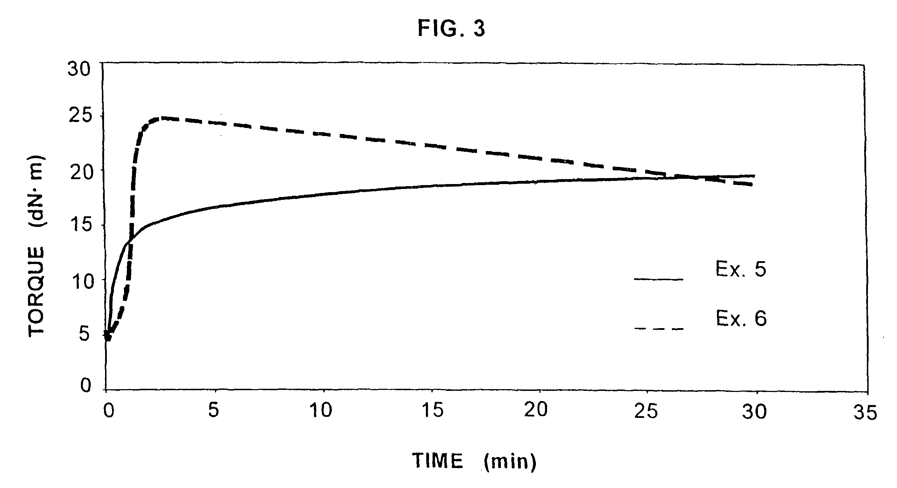

The compositions thus prepared were subjected to MDR rheometric analysis using the same rheometer and under the same conditions as in Examples 1-4. The rheometric curves thus obtained are given in Fig. 3 (continuous line: Ex. 5, dashed line: Ex. 6), while the significant parameters are given in Table 2.

The mechanical properties (according to ISO standard 37) and the hardness in IRHD degrees (according to ISO standard 48) were measured on samples of the abovementioned compositions crosslinked at 170°C for 10 min.

The results are given in Table 2.

As can be seen from the data given in Table 2, the composition according to the present invention, which is free of conventional crosslinking agents, makes it possible to obtain a crosslinked product which has characteristics that are entirely comparable with those which can be obtained by the same composition to which a conventional sulphur-based crosslinking system has been added.

TABLE 2

| EXAMPLE | 5 | 6(*) |
|---|---|---|
| Epoxyprene® ENR 50 | 100 | 100 |
| Zeosil® 1165 | 70 | 70 |
| Vulkanox® HS | 1.5 | 1.5 |
| Stearic acid | -- | 2 |
| ZnO | -- | 2.5 |
| Vulkacit® CZ | -- | 2 |
| Sulphur | -- | 1.2 |
| $M_L$ (dN·m) | 4.61 | 4.62 |
| $M_H$ (dN·m) | 19.65 | 24.83 |
| $M_{fin}$ (dN·m) | 19.65 | 18.81 |
| $t_{ML}$ (sec) | 0.1 | 0.1 |
| $t_{s1}$ (sec) | 0.23 | 0.36 |
| $t_{90}$ (sec) | 12.06 | 1.64 |
| $M_{eff}$ (dN·m) | 17.27 | 22.37 |
| $t_{eff}$ (sec) | 1.75 | 4.71 |
| %$R_{eff}$ | 84.2 | 87.8 |
| Breaking load (MPa) | 9.42 | 11.76 |
| Elongation at break (%) | 137 | 153 |
| Hardness at 23°C (IRHD degrees) | 82.9 | 82.6 |
| Hardness at 100°C (IRHD degrees) | 67.0 | 71.8 |

(*) Comparative
Epoxyprene® ENR 50: epoxidized natural rubber -containing 50 mol% of epoxide groups (Guthrie);
Vulkanox® HS: oligomerized 2,2,4-trimethyl-1,2-dihydroquinoline (antioxidant - Bayer);
Vulkacit® CZ: N-cyclohexyl-2-benzothiazylsulphenamide (accelerator - Bayer).

EXAMPLES 7-9

Compositions consisting of 100 phr of 50% epoxidized natural rubber (Epoxyprene® ENR 50), 70 phr of silica (Zeosil® 1165) and 1.5 phr of antioxidant (Vulkanox® HS) were prepared.

For Example 7, the same open cylinder mixer as in Examples 1-4 was used, with a mixing time of about 30 min, the maximum temperature being kept at about 60°C. Example 8 was carried out using a closed mixer with interlocking rotors (Intermix), with a processing time of 20 min and a maximum temperature of 95°C. Lastly, Example 9 was carried out using a closed mixer with tangential rotors (Banbury), with a processing time of 5 min, reaching a maximum temperature of 120°C. For Examples 8 and 9, the blend was subsequently reprocessed in the open mixer for about 2 min in order to obtain a uniform sheet from which the samples for the subsequent tests were taken.

The blends thus obtained were crosslinked at 170°C for 10 min. The results are given in Table 3. For Example 9 (comparative) no data relating to the MDR curves are given since they were barely reproducible.

It is clear from these data that insufficient dispersion of the silica in the polymer matrix (Ex. 9) leads to a crosslinked product with poor tensile strength properties.

TABLE 3

| EXAMPLE | 7 | 8 | 9(*) |
|---|---|---|---|
| $M_L$(dN·m) | 4.61 | 5.94 | -- |
| $M_H$ (dN·m) | 19.65 | 13.91 | -- |
| $M_{fin}$ (dN·m) | 19.65 | 13.91 | -- |
| $t_{ML}$ (sec) | 0.1 | 0 | -- |
| $t_{s1}$ (sec) | 0.23 | 0.16 | -- |
| $t_{90}$ (sec) | 12.06 | 7.67 | -- |
| $M_{eff}$ (dN·m) | 17.27 | 12.88 | -- |
| $t_{eff}$ (sec) | 1.75 | 1.11 | -- |
| $\%R_{eff}$ | 84.2 | 87.1 | -- |
| Degree of dispersion of silica (%) | 100 | 98.2 | 89.5 |
| Breaking load (MPa) | 14.3 | 10.9 | 7.2 |
| Elongation at break (%) | 143 | 202 | 118 |

(*) Comparative

EXAMPLES 10-14

The compositions given in Table 4 were prepared using the same open mixer as in Examples 1-4, with a mixing time of about 30 min, the maximum temperature being kept at about 60°C. Optical microscopy analysis of the compositions thus obtained showed an essentially complete dispersion of the filler. The data relating to the rheometric curves (obtained as described in Examples 1-4) are given in Table 4. The mechanical properties (according to ISO standard 37) and the crosslinking density ($d_R$) were measured on crosslinked samples. The crosslinking density was determined by measuring the swelling in toluene.

The results obtained demonstrate that the compositions containing a mixture of silica and carbon black as filler are capable of crosslinking effectively, provided that the silica is predominant relative to the total amount of filler added.

TABLE 4

| EXAMPLE | 10 | 11 | 12 | 13(*) | 14(*) |
|---|---|---|---|---|---|
| Epoxyprene® ENR 50 | 100 | 100 | 100 | 100 | 100 |
| Zeosil® 1165 | 60 | 40 | 30 | 20 | 10 |
| Carbon black N234 | -- | 18 | 27 | 36 | 45 |
| $M_H - M_L$ (dN·m) | 11.47 | 12.25 | 13.59 | 13.42 | 10.70 |
| $t_{eff}$ (min) | 2.19 | 2.14 | 2.15 | 1.92 | 1.75 |
| $\%R_{eff}$ (%) | 77.8 | 72.9 | 68.6 | 62.9 | 53.8 |
| $d_R$ (mol/g) | $2.96\times10^{-5}$ | $2.54\times10^{-5}$ | $2.20\times10^{-5}$ | $1.87\times10^{-5}$ | $1.34\times10^{-5}$ |
| Breaking load (MPa) | 10.8 | 9.0 | 9.0 | 6.9 | 4.9 |
| Elongation at break (%) | 334 | 334 | 351 | 348 | 424 |

(*) Comparative

EXAMPLE 15

A composition consisting of 100 phr of 10% epoxidized natural rubber (Epoxyprene® ENR 10) and 70 phr of silica (Zeosil® 1165) was prepared, using the same open mixer as in Examples 1-4. The composition was crosslinked by heating to 170°C for 10 min. The following were measured on a sample of the crosslinked material:

- the hardness in IRHD degrees according to ISO standard 48;
- the modulus of elasticity E', determined using a dynamic Inston device in traction-compression according to the following procedures.

A test piece of the crosslinked material, of cylindrical shape (length = 25 mm; diameter = 14 mm), preloaded in compression up to a longitudinal deformation of 10% relative to the initial length, and kept at 70°C throughout the test, was subjected to a dynamic sinusoidal deformation of amplitude ± 3.33% relative to the length under pre-loading, with a frequency of 100 Hz.
The results obtained are as follows:

| | |
|---|---|
| IRHD hardness | 90 at 23°C |
| IRHD hardness | 84 at 100°C |
| Modulus of elasticity (E') at 70°C | 30.2 MPa |

The high values of hardness and of dynamic modulus of elasticity even at high temperature clearly shows that this composition is particularly suitable for constituting the filler in a tyre bead, for which an IRHD hardness at 100°C of greater than 80 and a modulus of elasticity E' at 70°C of greater than 15 MPa are generally required.

## Claims

1. Process for producing tyres for the wheels of vehicles, the said process comprising the following phases:

   - making a raw tyre comprising at least one crosslinkable elastomeric material;
   - molding the raw tyre in a molding cavity defined in a vulcanization mold;
   - crosslinking the elastomeric material by heating the tyre to a predetermined temperature and for a predetermined time;

   **characterized in that** the raw tyre comprises at least one crosslinkable elastomeric material comprising an elastomeric polymer containing epoxide groups and an active filler containing hydroxyl groups which is dispersed in the said polymer, and **in that** the phase of crosslinking of the said elastomeric material is carried out essentially without additional crosslinking agents.

2. Process according to Claim 1, in which the crosslinking phase is carried out by heating the tyre to a maximum temperature of at least 100°C for a time of at least 3 minutes.

3. Process according to Claim 2, in which the crosslinking phase is carried out by heating the tyre to a maximum temperature of at least 120°C for a time of at least 5 minutes.

4. Process according to any one of the preceding claims, in which the active filler is dispersed in the elastomeric polymer containing epoxide groups, with a dispersion index of greater than 90%.

5. Process according to Claim 4, in which the active filler is dispersed in the elastomeric polymer containing epoxide groups, with a dispersion index of greater than 95%.

6. Process according to Claim 5, in which the active filler is dispersed in the elastomeric polymer containing epoxide groups, with a dispersion index of greater than 98%.

7. Process according to any one of the preceding claims, in which the crosslinkable elastomeric material is **characterized by** an effective degree of crosslinking equal to at least 65% after no more than 5 min of heating at 170°C.

8. Composition comprising an elastomeric polymer containing epoxide groups and an active filler containing hydroxyl groups dispersed in the said polymer, the said composition being crosslinkable essentially without additional crosslinking agents and being **characterized by** an effective degree of crosslinking equal to at least 65% after no more than 5 min of heating at 170°C.

9. Composition according to Claim 8, in which the active filler is dispersed in the elastomeric polymer containing epoxide groups, with a dispersion index of greater than 90%.

10. Composition according to Claim 9, in which the active filler is dispersed in the elastomeric polymer containing epoxide groups, with a dispersion index of greater than 95%.

11. Composition according to Claim 10, in which the active filler is dispersed in the elastomeric polymer containing epoxide groups, with a dispersion index of greater than 98%.

12. Composition according to any one of Claims 8 to 11, in which the elastomeric polymer containing epoxide groups is a homopolymer or copolymer with elastomeric properties, having a glass transition temperature ($T_g$) of less than 23°C.

13. Composition according to Claim 12, in which the elastomeric polymer containing epoxide groups has a glass transition temperature ($T_g$) of less than 0°C.

14. Composition according to any one of Claims 8 to 13, in which the elastomeric polymer contains at least 0.05 mol% of epoxide groups relative to the total number of moles of monomers present in the polymer.

15. Composition according to Claim 14, in which the elastomeric polymer contains from 0.1 to 70 mol% of epoxide groups relative to the total number of moles of monomers present in the polymer.

16. Composition according to Claim 15, in which the polymer contains from 0.5 to 60 mol% of epoxide groups relative to the total number of moles of monomers present in the polymer.

17. Composition according to any one of Claims 8 to 16, in which the elastomeric polymer has a mean molecular weight of between 2,000 and 1,000,000.

18. Composition according to Claim 17, in which the elastomeric polymer has a mean molecular weight of between 50,000 and 500,000.

19. Composition according to any one of Claims 8 to 18, in which the elastomeric polymer is an epoxidized diene homopolymer or copolymer derived from one or more conjugated diene monomers, optionally copolymerized with monovinylarenes and/or polar comonomers.

20. Composition according to Claim 19, in which the elastomeric polymer containing epoxide groups is chosen from: natural rubber, polybutadiene, polyisoprene, styrene/butadiene copolymers, butadiene/isoprene copolymers, styrene/isoprene copolymers, nitrile rubbers or mixtures thereof.

21. Composition according to any one of Claims 8 to 18, in which the elastomeric polymer is a copolymer of one or more monoolefins with an olefinic comonomer containing one or more epoxide groups.

22. Composition according to any one of Claims 8 to 21, in which the elastomeric polymer is a mixture with one or more non-epoxidized elastomeric polymers.

23. Composition according to any one of Claims 8 to 22, in which the active filler is chosen from: silica, alumina, titanium oxide, cellulose fibres, microcrystalline cellulose, zeolites, kaolin, or mixtures thereof.

24. Composition according to Claim 23, in which the active filler is chosen from precipitated silica, pyrogenic silica, alumina, or mixtures thereof.

25. Composition according to any one of Claims 8 to 22, in which the active filler is a filler whose surface is modified with hydroxyl groups.

26. Composition according to Claim 25, in which the active filler is carbon black coated at least partially with silica.

27. Composition according to any one of Claims 8 to 26, in which the surface area of the active filler is greater than 40 $m^2$/g.

**28.** Composition according to Claim 27, in which the surface area of the active filler is between 80 and 600 $m^2$/g.

**29.** Composition according to any one of Claims 8 to 28, in which the filler has a density of active hydroxyl groups of greater than 1 group/$nm^2$.

**30.** Composition according to Claim 29, in which the filler has a density of active hydroxyl groups of greater than 5 groups/$nm^2$.

**31.** Composition according to any one of Claims 8 to 30, in which the active filler is present in an amount of greater than 20 phr.

**32.** Composition according to Claim 31, in which the active filler is present in an amount of between 30 and 150 phr.

**33.** Composition according to any one of Claims 8 to 32, in which the active filler is a mixture with a non-active reinforcing filler.

**34.** Composition according to Claim 33, in which the active filler is at least 50% by weight of the total filler present in the composition.

**35.** Composition according to any one of Claims 8 to 34, also comprising one or more additives chosen from: antioxidants, protective agents, plasticizers, adhesives, anti-ozonizing agents, curing resins, modifying resins, fibres and the like.

**36.** Composition according to any one of Claims 8 to 35, also comprising a lubricant.

**37.** Composition according to Claim 36, in which the lubricant is present in an amount of between 2 and 100 phr.

**38.** Composition according to Claim 37, in which the lubricant is present in an amount of between 5 and 50 phr.

**39.** Process for preparing an elastomeric composition comprising an elastomeric polymer containing epoxide groups and an active filler containing hydroxyl groups which is dispersed in the said polymer, the said composition being crosslinkable without additional crosslinking agents, the said process comprising mixing the active filler with the polymer for a predetermined time so as to obtain a degree of dispersion of the filler of greater than 90%, and at a predetermined temperature so as to avoid pre-crosslinking of the composition.

**40.** Process according to Claim 39, in which the mixing temperature is kept below 130°C.

**41.** Process according to Claim 40, in which the mixing temperature is kept below 100°C.

**42.** Process according to Claim 41, in which the mixing temperature is kept below 80°C.

**43.** Process according to any one of Claims 39 to 42, in which the active filler and the polymer are mixed using an open mixer.

**44.** Process according to any one of Claims 39 to 42, in which the active filler and the polymer are mixed using an internal mixer.

**45.** Process according to any one of Claims 39 to 42, in which the active filler and the polymer are mixed using a continuous mixer.

**46.** Process according to any one of Claims 43 to 45, in which the mixing time is greater than 90 sec.

**47.** Process according to any one of Claim 46, in which the mixing time is between 3 and 35 min.

**48.** Process according to any one of Claims 39 to 42, in which the active filler is mixed with the polymer base in the form of an aqueous emulsion or a solution in an organic solvent, and the polymer containing the dispersed filler is then separated out by precipitation.

49. Crosslinked manufactured product comprising an elastomeric polymer containing epoxide groups and an active filler containing hydroxyl groups which is dispersed in the said polymer, **characterized in that** the said manufactured product is crosslinked essentially without additional crosslinking agents, and the filler is dispersed in the polymer, with a dispersion index of greater than 90%.

50. Manufactured product according to Claim 49, in which the active filler is dispersed in the elastomeric polymer containing epoxide groups, with a dispersion index of greater than 95%.

51. Manufactured product according to Claim 50, in which the active filler is dispersed in the elastomeric polymer containing epoxide groups, with a dispersion index of greater than 98%.

52. Manufactured product according to any one of Claims 49 to 51, which is obtained by crosslinking, essentially without additional crosslinking agents, a composition according to any one of Claims 8 to 38.

53. Tyre for the wheels of vehicles, comprising one or more components made of crosslinked elastomeric material, **characterized in that** at least one of the said components comprises a crosslinked elastomeric material comprising an elastomeric polymer containing epoxide groups and an active filler containing hydroxyl groups dispersed in the said polymer, the said material being crosslinked essentially without additional crosslinking agents.

54. Tyre according to Claim 53, in which the crosslinked elastomeric material is obtained by crosslinking, essentially without additional crosslinking agents, a composition according to any one of Claims 8 to 38.


**Patentansprüche**

1. Verfahren zum Herstellen von Reifen für Räder von Fahrzeugen, wobei das Verfahren die folgenden Phasen aufweist:

   - Herstellen eines Rohreifens, der wenigstens ein vernetzbares elastomeres Material aufweist,
   - Ausformen des Rohreifens in einem Formhohlraum, der in einer Vulkanisierform ausgebildet ist, und
   - Vernetzen des elastomeren Materials durch Erhitzen des Reifens auf eine vorgegebene Temperatur und für eine vorgegebene Zeit,

   **dadurch gekennzeichnet,**

   - **dass** der Rohreifen wenigstens ein vernetzbares elastomeres Material mit einem Epoxidgruppen enthaltenden elastomeren Polymer und einem Hydroxylgruppen enthaltenden aktiven Füllstoff aufweist, der in dem Polymer dispergiert ist, und
   - **dass** die Phase der Vernetzung des elastomeren Materials im wesentlichen ohne zusätzliche Vernetzungsmittel ausgeführt wird.

2. Verfahren nach Anspruch 1, bei welchem die Vernetzungsphase durch Erhitzen des Reifens auf eine Maximaltemperatur von wenigstens 100°C während eines Zeitraums von wenigstens drei Minuten ausgeführt wird.

3. Verfahren nach Anspruch 2, bei welchem die Vernetzungsphase durch Erhitzen des Reifens auf eine maximale Temperatur von wenigstens 120°C über einen Zeitraum von wenigstens fünf Minuten ausgeführt wird.

4. Verfahren nach einem der vorhergehenden Ansprüche, bei welchem der aktive Füllstoff in dem Epoxidgruppen enthaltenden elastischen Polymer mit einem Dispersionsindex von mehr als 90% dispergiert wird.

5. Verfahren nach Anspruch 4, bei welchem der aktive Füllstoff in dem Epoxidgruppen enthaltenden elastomeren Polymer mit einem Dispersionsindex von mehr als 95% dispergiert wird.

6. Verfahren nach Anspruch 5, bei welchem der aktive Füllstoff in dem Epoxidgruppen enthaltenden elastomeren Polymer mit einem Dispersionsindex von mehr als 98% dispergiert wird.

7. Verfahren nach einem der vorhergehenden Ansprüche, bei welchem sich das vernetzbare elastomere Material durch einen effektiven Vernetzungsgrad auszeichnet, der wenigstens 65% nach nicht mehr als fünf Minuten Erhitzen bei 170°C gleich ist.

8. Mischung mit einem Epoxidgruppen enthaltenden elastomeren Polymer und mit einem Hydroxylgruppen enthaltenden aktiven Füllstoff, der in dem Polymer dispergiert ist, wobei die Mischung im wesentlichen ohne zusätzliche Vernetzungsmittel vernetzbar ist und sich durch einen effektiven Vernetzungsgrad auszeichnet, der wenigstens 65% nach nicht mehr als fünf Minuten Erhitzen bei 170°C gleich ist.

9. Mischung nach Anspruch 8, bei welcher der aktive Füllstoff in dem Epoxidgruppen enthaltenden elastomeren Polymer mit einem Dispersionsindex von mehr als 90% dispergiert ist.

10. Mischung nach Anspruch 9, bei welcher der aktive Füllstoff in dem Epoxidgruppen enthaltenden elastomeren Polymer mit einem Dispersionsindex von mehr als 95% dispergiert ist.

11. Mischung nach Anspruch 10, bei welcher der aktive Füllstoff in dem Epoxidgruppen enthaltenden elastomeren Polymer mit einem Dispersionsindex von mehr als 98% dispergiert ist.

12. Mischung nach einem der Ansprüche 8 bis 11, bei welcher das Epoxidgruppen enthaltende elastomere Polymer ein Homopolymer oder Copolymer mit elastischen Eigenschaften ist, das eine Glasübergangstemperatur ($T_g$) von weniger als 23°C hat.

13. Mischung nach Anspruch 12, bei welcher das Epoxidgruppen enthaltende elastomere Polymer eine Glasübergangstemperatur ($T_g$) von weniger als 0°C hat.

14. Mischung nach einem der Ansprüche 8 bis 13, bei welcher das elastomere Polymer wenigstens 0,05 Mol% Epoxidgruppen bezogen auf die Gesamtmolzahl von in dem Polymer vorhandenen Monomeren enthält.

15. Mischung nach Anspruch 14, bei welcher das elastomere Polymer 0,1 bis 70 Mol% Epoxidgruppen bezogen auf die Gesamtmolzahl von in dem Polymer vorhandenen Monomeren enthält.

16. Zusammensetzung nach Anspruch 15, bei welcher das Polymer 0,5 bis 60 Mol% Epoxidgruppen bezogen auf die Gesamtmolzahl der in dem Polymer vorhandenen Monomere enthält.

17. Mischung nach einem der Ansprüche 8 bis 16, bei welcher das elastomere Polymer ein mittleres Molekulargewicht zwischen 2.000 und 1.000.000 hat.

18. Mischung nach Anspruch 17, bei welcher das elastomere Polymer ein mittleres Molekulargewicht zwischen 50.000 und 500.000 hat.

19. Mischung nach einem der Ansprüche 8 bis 18, bei welcher das elastomere Polymer ein epoxidiertes Dien-Homopolymer oder Copolymer hergestellt aus einem oder mehreren konjugierten Dien-Monomeren, wahlweise copolymerisiert mit Monovinylarenen und/oder polaren Comonomeren, ist.

20. Mischung nach Anspruch 19, bei welcher das Epoxidgruppen enthaltende elastomere Polymer ausgewählt wird aus natürlichem Kautschuk, Polybutadien, Polyisopren, Styrol/Butadien-Copolymeren, Butadien/Isopren-Copolymeren, Styrol/Isopren-Copolymeren, Nitrilkautschuken oder mit Gemischen davon.

21. Mischung nach einem der Ansprüche 8 bis 18, bei welcher das elastomere Polymer ein Copolymer von einem oder mehreren Monoolefinen mit einem olefinischen Comonomer ist, das eine oder mehrere Epoxidgruppen enthält.

22. Mischung nach einem der Ansprüche 8 bis 21, bei welcher das elastomere Polymer ein Gemisch mit einem oder mehreren nichtepoxidierten elastomeren Polymeren ist.

23. Mischung nach einem der Ansprüche 8 bis 22, bei welcher der aktive Füllstoff ausgewählt wird aus Siliziumdioxid, Aluminiumoxid, Titanoxid, Cellulosefasern, mikrokristalliner Cellulose, Zeolithen, Kaolin oder Gemischen davon.

24. Mischung nach Anspruch 23, bei welcher der aktive Füllstoff ausgewählt wird aus ausgefälltem Siliziumdioxid, pyrogenem Siliziumdioxid, Aluminiumoxid oder Gemischen davon.

25. Mischung nach einem der Ansprüche 8 bis 22, bei welcher der aktive Füllstoff ein Füllstoff ist, dessen Oberfläche mit Hydroxylgruppen modifiziert ist.

26. Mischung nach Anspruch 25, bei welcher der aktive Füllstoff Ruß ist, der wenigstens teilweise mit Siliziumdioxid beschichtet ist.

27. Mischung nach einem der Ansprüche 8 bis 26, bei welcher die Oberflächenfläche des aktiven Füllstoffs mehr als 40 $m^2$/g beträgt.

28. Mischung nach Anspruch 27, bei welcher die Oberflächenfläche des aktiven Füllstoffs zwischen 80 und 600 $m^2$/g liegt.

29. Mischung nach einem der Ansprüche 8 bis 28, bei welcher der Füllstoff eine Dichte von aktiven Hydroxylgruppen von mehr als 1 Gruppe/$nm^2$ hat.

30. Mischung nach Anspruch 29, bei welcher der Füllstoff eine Dichte von aktiven Hydroxylgruppen von mehr als 5 Gruppen/$nm^2$ hat.

31. Mischung nach einem der Ansprüche 8 bis 30, bei welcher der aktive Füllstoff in einer Menge von mehr als 20 phr vorhanden ist.

32. Mischung nach Anspruch 31, bei welcher der aktive Füllstoff in einer Menge zwischen 30 und 150 phr vorhanden ist.

33. Mischung nach einem der Ansprüche 8 bis 32, bei welcher der aktive Füllstoff ein Gemisch mit einem nichtaktiven verstärkenden Füllstoff ist.

34. Mischung nach Anspruch 33, bei welcher der aktive Füllstoff wenigstens 50 Gewichtsprozent des gesamten in der Mischung vorhandenen Füllstoffs beträgt.

35. Mischung nach einem der Ansprüche 8 bis 34, welche auch einen oder mehrere Zusatzstoffe aufweist, die aus Antioxidantien, Schutzmitteln, Weichmachern, Haftmitteln, Antiozonisierungsmitteln, Härtungsharzen, Modifizierungsharzen, Fasern und dergleichen ausgewählt sind.

36. Mischung nach einem der Ansprüche 8 bis 35, welche auch ein Schmiermittel aufweist.

37. Mischung nach Anspruch 36, bei welcher das Schmiermittel in einer Menge zwischen 2 und 100 phr vorhanden ist.

38. Mischung nach Anspruch 37, bei welcher das Schmiermittel in einer Menge zwischen 5 und 50 phr vorhanden ist.

39. Verfahren zur Herstellung einer elastomeren Mischung, welche ein Epoxidgruppen enthaltendes elastomeres Polymer und einen Hydroxylgruppen enthaltenden aktiven Füllstoff aufweist, der in dem Polymer dispergiert ist, wobei die Mischung ohne zusätzliche Vernetzungsmittel vernetzbar ist und bei dem Verfahren der aktive Füllstoff mit dem Polymer über eine vorgegebene Zeit zur Erzielung eines Dispersionsgrads des Füllstoffs von mehr als 90% und bei einer vorgegebenen Temperatur zur Vermeidung einer Vorvernetzung der Mischung gemischt wird.

40. Verfahren nach Anspruch 39, bei welchem die Mischtemperatur unter 130°C gehalten wird.

41. Verfahren nach Anspruch 40, bei welchem die Mischtemperatur unter 100°C gehalten wird.

42. Verfahren nach Anspruch 41, bei welchem die Mischtemperatur unter 80°C gehalten wird.

43. Verfahren nach einem der Ansprüche 39 bis 42, bei welchem der aktive Füllstoff und das Polymer unter Verwendung eines offenen Mischers gemischt werden.

44. Verfahren nach einem der Ansprüche 39 bis 42, bei welchem der aktive Füllstoff und das Polymer unter Verwendung eines Innenmischers gemischt werden.

45. Verfahren nach einem der Ansprüche 39 bis 42, bei welchem der aktive Füllstoff und das Polymer unter Verwendung eines Durchlaufmischers gemischt werden.

**46.** Verfahren nach einem der Ansprüche 43 bis 45, bei welchem die Mischzeit mehr als 90s beträgt.

**47.** Verfahren nach Anspruch 46, bei welchem die Mischzeit zwischen 3 und 35 Minuten beträgt.

**48.** Verfahren nach einem der Ansprüche 39 bis 42, bei welchem der aktive Füllstoff mit der Polymerbasis in Form einer wässrigen Emulsion oder einer Lösung in einem organischen Lösungsmittel gemischt und das den dispergierten Füllstoff enthaltende Polymer dann durch Ausfällung separiert wird.

**49.** Vernetztes Industrieprodukt mit einem Epoxidgruppen enthaltenden elastomeren Polymer und einem Hydroxylgruppen enthaltenden aktiven Füllstoff, der in dem Polymer dispergiert ist, **dadurch gekennzeichnet, dass** das Industrieprodukt im wesentlichen ohne zusätzliche Vernetzungsmittel vernetzt ist und dass der Füllstoff in dem Polymer mit einem Dispersionsindex von mehr als 90% dispergiert ist.

**50.** Industrieprodukt nach Anspruch 49, bei welchem der aktive Füllstoff in dem Epoxidgruppen enthaltenden elastomeren Polymer mit einem Dispersionsindex von mehr als 95% dispergiert ist.

**51.** Industrieprodukt nach Anspruch 50, bei welchem der aktive Füllstoff in dem Epoxidgruppen enthaltenden elastomeren Polymer mit einem Dispersionsindex von mehr als 98% dispergiert ist.

**52.** Industrieprodukt nach einem der Ansprüche 49 bis 51, das durch Vernetzen einer Mischung nach einem der Ansprüche 8 bis 38 im wesentlichen ohne zusätzliche Vernetzungsmittel erhalten wird.

**53.** Reifen für Räder von Fahrzeugen mit einem oder mehreren Bauelementen, die aus einem vernetzten elastomeren Material hergestellt sind, **dadurch gekennzeichnet, dass** wenigstens eines der Bauelemente ein vernetztes elastomeres Material mit einem Epoxidgruppen enthaltenden elastomeren Polymer und einem Hydroxylgruppen enthaltenden aktiven Füllstoff aufweist, der in dem Polymer dispergiert ist, wobei das Material im wesentlichen ohne zusätzliche Vernetzungsmittel vernetzt ist.

**54.** Reifen nach Anspruch 53, bei welchem das vernetzte elastomere Material durch Vernetzen einer Mischung nach einem der Ansprüche 8 bis 38 im wesentlichen ohne zusätzliche Vernetzungsmittel erhalten wird.

## Revendications

**1.** Procédé de production de pneumatiques pour roues de véhicules, lequel procédé comporte les étapes suivantes :

- préparer un pneumatique brut comportant au moins un matériau élastomère réticulable,
- mouler ce pneumatique brut dans une cavité de moulage délimitée par un moule à vulcanisation,
- et faire réticuler le matériau élastomère en chauffant ce pneumatique à une température prédéterminée pendant un laps de temps prédéterminé ;

procédé **caractérisé en ce que** le pneumatique brut comporte au moins un matériau élastomère réticulable contenant un polymère élastomère, qui comporte des groupes époxyde, et une charge active, qui comporte des groupes hydroxyle et se trouve dispersée dans ledit polymère, et **en ce que** l'étape de réticulation dudit matériau élastómère est effectuée pratiquement sans addition d'agents de réticulation.

**2.** Procédé conforme à la revendication 1, dans lequel on effectue l'étape de réticulation en chauffant le pneumatique à une température maximale d'au moins 100 °C pendant un laps de temps d'au moins 3 minutes.

**3.** Procédé conforme à la revendication 2, dans lequel on effectue l'étape de réticulation en chauffant le pneumatique à une température maximale d'au moins 120 °C pendant un laps de temps d'au moins 5 minutes.

**4.** Procédé conforme à l'une des revendications précédentes, dans lequel la charge active se trouve dispersée, dans le polymère élastomère comportant des groupes époxyde, avec un indice de dispersion supérieur à 90 %.

**5.** Procédé conforme à la revendication 4, dans lequel la charge active se trouve dispersée, dans le polymère élastomère comportant des groupes époxyde, avec un indice de dispersion supérieur à 95 %.

6.   Procédé conforme à la revendication 5, dans lequel la charge active se trouve dispersée, dans le polymère élastomère comportant des groupes époxyde, avec un indice de dispersion supérieur à 98 %.

7.   Procédé conforme à l'une des revendications précédentes, dans lequel le matériau élastomère réticulable est **caractérisé en ce que** son taux effectif de réticulation, après au plus 5 minutes de chauffage à 170 °C, vaut au moins 65 %.

8.   Composition comprenant un polymère élastomère, qui comporte des groupes époxyde, et une charge active, qui comporte des groupes hydroxyle et se trouve dispersée dans ledit polymère, laquelle composition peut être réticulée pratiquement sans addition d'agents de réticulation et est **caractérisée en ce que** son taux effectif de réticulation, après au plus 5 minutes de chauffage à 170 °C, vaut au moins 65 %.

9.   Composition conforme à la revendication 8, dans laquelle la charge active se trouve dispersée, dans le polymère élastomère comportant des groupes époxyde, avec un indice de dispersion supérieur à 90 %.

10.  Composition conforme à la revendication 9, dans laquelle la charge active se trouve dispersée, dans le polymère élastomère comportant des groupes époxyde, avec un indice de dispersion supérieur à 95 %.

11.  Composition conforme à la revendication 10, dans laquelle la charge active se trouve dispersée, dans le polymère élastomère comportant des groupes époxyde, avec un indice de dispersion supérieur à 98 %.

12.  Composition conforme à l'une des revendications 8 à 11, dans laquelle le polymère élastomère comportant des groupes époxyde est un homopolymère ou un copolymère qui est doté de propriétés d'élastomère et dont la température de transition vitreuse $T_g$ est inférieure à 23 °C.

13.  Composition conforme à la revendication 12, dans laquelle la température de transition vitreuse $T_g$ du polymère élastomère comportant des groupes époxyde est inférieure à 0 °C.

14.  Composition conforme à l'une des revendications 8 à 13, dans laquelle le polymère élastomère contient au moins 0,05 % en moles de groupes époxyde, par rapport au nombre total de moles de monomères présents dans le polymère.

15.  Composition conforme à la revendication 14, dans laquelle le polymère élastomère contient de 0,1 à 70 % en moles de groupes époxyde, par rapport au nombre total de moles de monomères présents dans le polymère.

16.  Composition conforme à la revendication 15, dans laquelle le polymère élastomère contient de 0,5 à 60 % en moles de groupes époxyde, par rapport au nombre total de moles de monomères présents dans le polymère.

17.  Composition conforme à l'une des revendications 8 à 16, dans laquelle le polymère élastomère présente une masse molaire moyenne valant de 2 000 à 1 000 000.

18.  Composition conforme à la revendication 17, dans laquelle le polymère élastomère présente une masse molaire moyenne valant de 50 000 à 500 000.

19.  Composition conforme à l'une des revendications 8 à 18, dans laquelle le polymère élastomère est un homopolymère ou copolymère de diène(s) époxydé, dérivé d'un ou de plusieurs monomères de type diène conjugué, éventuellement copolymérisé(s) avec des comonomères monovinyl-aromatiques et/ou des comonomères polaires.

20.  Composition conforme à la revendication 19, dans laquelle le polymère élastomère comportant des groupes époxyde est choisi parmi les suivants : caoutchouc naturel, polybutadiène, polyisoprène, copolymères de styrène et de butadiène, copolymères de butadiène et d'isoprène, copolymères de styrène et d'isoprène, caoutchoucs nitrile, et leurs mélanges.

21.  Composition conforme à l'une des revendications 8 à 18, dans laquelle le polymère élastomère est un copolymère d'une ou plusieurs mono-oléfines et d'un comonomère oléfinique comportant un ou plusieurs groupes époxyde.

**22.** Composition conforme à l'une des revendications 8 à 21, dans laquelle le polymère élastomère se trouve mélangé avec un ou plusieurs polymères élastomères non-époxydés.

**23.** Composition conforme_à l'une des revendications 8 à 22, dans laquelle la charge active est choisie parmi les suivantes : silice, alumine, oxyde de titane, fibres cellulosiques, cellulose microcristalline, zéolites, kaolin, et leurs mélanges.

**24.** Composition conforme à la revendication 23, dans laquelle la charge active est choisie parmi de la silice précipitée, de la silice de pyro-hydrolyse, de l'alumine et des mélanges de ces charges.

**25.** Composition conforme à l'une des revendications 8 à 22, dans laquelle la charge active est une charge dont la surface est modifiée par des groupes hydroxyle.

**26.** Composition conforme à la revendication 25, dans laquelle la charge active est du noir de carbone revêtu, au moins en partie, de silice.

**27.** Composition conforme à l'une des revendications 8 à 26, dans laquelle l'aire spécifique de la charge active est supérieure à 40 g/m$^2$.

**28.** Composition conforme à la revendication 27, dans laquelle l'aire spécifique de la charge active vaut de 80 à 600 g/m$^2$.

**29.** Composition conforme à l'une des revendications 8 à 28, dans laquelle la charge porte des groupes hydroxyle actifs en une densité supérieure à 1 groupe par nanomètre carré.

**30.** Composition conforme à la revendication 29, dans laquelle la charge porte des groupes hydroxyle actifs en une densité supérieure à 5 groupes par nanomètre carré.

**31.** Composition conforme à l'une des revendications 8 à 30, dans laquelle la charge active se trouve présente en une proportion supérieure à 20 pcr.

**32.** Composition conforme à la revendication 31, dans laquelle la charge active se trouve présente en une proportion de 30 à 150 pcr.

**33.** Composition conforme à l'une des revendications 8 à 32, dans laquelle la charge active est mélangée avec une charge renforçante non-active.

**34.** Composition conforme à la revendication 33, dans laquelle la charge active représente au moins 50 % du poids total des charges présentes dans la composition.

**35.** Composition conforme à l'une des revendications 8 à 34, qui contient aussi un ou plusieurs adjuvants choisis parmi les suivants : antioxydants, agents protecteurs, plastifiants, adhésifs, agents anti-ozone, résines durcissantes, résines modifiantes, fibres, et similaires.

**36.** Composition conforme à l'une des revendications 8 à 35, qui contient aussi un lubrifiant.

**37.** Composition conforme à la revendication 36, dans laquelle le lubrifiant se trouve présent en une proportion de 2 à 100 pcr.

**38.** Composition conforme à la revendication 37, dans laquelle le lubrifiant se trouve présent en une proportion de 5 à 50 pcr.

**39.** Procédé de préparation d'une composition élastomère comprenant un polymère élastomère, qui comporte des groupes époxyde, et une charge active, qui comporte des groupes hydroxyle et se trouve dispersée dans ledit polymère, laquelle composition peut être réticulée pratiquement sans addition d'agents de réticulation, lequel procédé comporte le fait de mélanger la charge active et le polymère pendant un laps de temps prédéterminé de manière à obtenir un indice de dispersion de la charge supérieur à 90 %, et à une température prédéterminée de manière à éviter toute réticulation prématurée de la composition.

**40.** Procédé conforme à la revendication 39, dans lequel on opère le mélange à une température maintenue inférieure à 130 °C.

**41.** Procédé conforme à la revendication 40, dans lequel on opère le mélange à une température maintenue inférieure à 100 °C.

**42.** Procédé conforme à la revendication 41, dans lequel on opère le mélange à une température maintenue inférieure à 80 °C.

**43.** Procédé conforme à l'une des revendications 39 à 42, dans lequel la charge active et le polymère sont mélangés à l'aide d'un mélangeur à cylindres.

**44.** Procédé conforme à l'une des revendications 39 à 42, dans lequel la charge active et le polymère sont mélangés à l'aide d'un mélangeur interne.

**45.** Procédé conforme à l'une des revendications 39 à 42, dans lequel la charge active et le polymère sont mélangés à l'aide d'un mélangeur en continu.

**46.** Procédé conforme à l'une des revendications 43 à 45, dans lequel l'opération de mélange dure plus de 90 secondes.

**47.** Procédé conforme à la revendication 46, dans lequel l'opération de mélange dure de 3 à 35 minutes.

**48.** Procédé conforme à l'une des revendications 39 à 42, dans lequel on mélange la charge active avec le polymère alors que celui-ci se trouve à l'état d'émulsion aqueuse ou de solution dans un solvant organique, et l'on sépare ensuite, en le faisant précipiter, le polymère contenant la charge dispersée.

**49.** Produit manufacturé réticulé, contenant un polymère élastomère, qui comporte des groupes époxyde, et une charge active, qui comporte des groupes hydroxyle et se trouve dispersée dans ledit polymère, **caractérisé en ce que** ce produit manufacturé est réticulé pratiquement sans addition d'agents de réticulation et **en ce que** l'indice de dispersion de la charge dans le polymère est supérieur à 90 %.

**50.** Produit manufacturé conforme à la revendication 49, dans lequel la charge active se trouve dispersée, dans le polymère élastomère comportant des groupes époxyde, avec un indice de dispersion supérieur à 95 %.

**51.** Produit manufacturé conforme à la revendication 50, dans lequel la charge active se trouve dispersée, dans le polymère élastomère comportant des groupes époxyde, avec un indice de dispersion supérieur à 98 %.

**52.** Produit manufacturé conforme à l'une des revendications 49 à 51, qu'on a obtenu en faisant réticuler, pratiquement sans addition d'agents de réticulation, une composition conforme à l'une des revendications 8 à 38.

**53.** Pneumatique pour roue de véhicule, comprenant un ou plusieurs composants faits d'un matériau élastomère réticulé, **caractérisé en ce qu'**au moins l'un de ces composants comprend un matériau élastomère réticulé contenant un polymère élastomère, qui comporte des groupes époxyde, et une charge active, qui comporte des groupes hydroxyle et se trouve dispersée dans ledit polymère, ledit matériau ayant été réticulé pratiquement sans addition d'agents de réticulation.

**54.** Pneumatique conforme à la revendication 53, pour lequel on a obtenu le matériau élastomère réticulé en faisant réticuler, pratiquement sans addition d'agents de réticulation, une composition conforme à l'une des revendications 8 à 38.

**FIG. 1**

FIG. 2

EP 1 144 503 B1

FIG. 3

EP 1 144 503 B1